# EUROPÄISCHE PATENTSCHRIFT

(11) **EP 3 464 045 B1**
(45) Veröffentlichungstag und Bekanntmachung des Hinweises auf die Patenterteilung: **08.12.2021**
(21) Anmeldenummer: 17724553.7
(22) Anmeldetag: 19.05.2017
(51) Int. Cl.: B63B 1/08, B63B 1/32, B63B 35/66

(54) **WASSERFAHRZEUG, INSBESONDERE SCHLEPPSCHIFF**
WATER VEHICLE, IN PARTICULAR TUGBOAT
VÉHICULE MARIN, EN PARTICULIER REMORQUEUR

(30) Priorität: 06.06.2016 DE 102016209879; 08.07.2016 DE 102016212471
(43) Veröffentlichungstag der Anmeldung: 10.04.2019
(73) Patentinhaber: Voith Patent GmbH, 89522 Heidenheim (DE)
(72) Erfinder: JÜRGENS, Dirk, 89522 Heidenheim (DE); PALM, Michael, 89522 Heidenheim (DE)
(74) Vertreter: Voith Patent GmbH - Patentabteilung
(86) Internationale Anmeldenummer: PCT/EP2017/062077
(87) Internationale Veröffentlichungsnummer: WO 2017/211570

(56) Entgegenhaltungen:
- JP-U- S6 365 593
- JP-U- S59 156 881

## Beschreibung

Die Erfindung betrifft ein Wasserfahrzeug, insbesondere Schleppschiff, im Einzelnen mit den Merkmalen aus dem Oberbegriff von Anspruch 1.

Wasserfahrzeuge in Form von Schleppschiffen finden Anwendung in der Assistenz größerer Wasserfahrzeuge. Stellvertretend wird auf die Druckschrift US 6698374 verwiesen. Diese offenbart ein Wasserfahrzeug mit einem Schiffskörper mit in einem Endbereich angeordneten steuerbarem Antrieb und einer im Heckbereich zentral in der Mittellängsebene angeordneten Finne zur Kursstabilisierung. Die steuerbaren Antriebe sind beispielsweise als Ruderpropeller oder Zykloidalpropeller ausgebildet. Der Schiffskörper fungiert als Verdrängungskörper, welcher über die Antriebe angetrieben durch das diesen umgebende Fluid bewegt wird. Derartige Wasserfahrzeuge sind im Heckbereich durch eine Schiffsform in Form eines Rund- oder Spitzhecks charakterisiert. D.h. die Heckform ist in der Ansicht von oben in den einzelnen Schnittebenen quer zur Mittellängsebene durch einen kurvenartigen bzw. gekrümmten stetigen Verlauf charakterisiert. Dabei entsteht unter bestimmten Strömungsbedingungen hinter dem Schiffskörper, insbesondere im Heckbereich eine Karmansche Wirbelstraße. Die dabei ausgebildeten Wirbel mit entgegengesetzten Drehsinn an den beidseitig der Mittenlängsachse angeordneten Seiten des Schiffskörpers lösen sich dabei bei ansteigender Strömungszahl von diesem ab. Diese Ablösung resultiert in starken Instabilitäten bei der Geradeausfahrt. Insbesondere bei Ausführungen mit Rundheck sind die Strömungsabrisse hinsichtlich Ort und Größe häufig nicht kalkulierbar; anders als bei Ausführungen mit Spiegelheck mit fest definierter Abrisskante, bei welchem eine Strömungsweiterführung nur über zusätzliche Leitelemente wie beispielsweise in GB 2479204 A beschrieben, möglich ist. Zur Lösung dieser Problematik wird in der Druckschrift WO 11113964 A1 vorgeschlagen, am Schiffskörper beidseits der Mittellängsebene jeweils eine Finne vorzusehen, die symmetrisch bezüglich dieser angeordnet sind. Diese Lösung ist konstruktiv jedoch sehr aufwendig.

Eine weitere Möglichkeit zur Stabilisierung eines Wasserfahrzeuges mit einem Schiffskörper und einer im Heckbereich angeordneten Finne mit einer Stabilisierungseinrichtung ist aus der Druckschrift EP 2 774 836 A1 vorbekannt. Die Finne erstreckt sich in Längsrichtung des Schiffskörpers und weist eine als Anströmkante fungierende Vorderkante, eine zu dieser entgegengesetzt ausgerichtete Hinterkante und Seitenflächen auf. Die Stabilisierungseinrichtung weist zumindest einen jeder Seitenfläche der Finne zugeordneten und gegenüber dieser in einem Winkel angeordneten strömungsführenden Flächenbereich auf, im einfachsten Fall in Form von Führungsblechen. Diese Ausführung ist jedoch lediglich für Wasserfahrzeuge mit Finnen im Heckbereich geeignet.

Aus JP 63-65593 U ist eine Ausführung mit im Bereich der Bilge und seitlich entlang der Fließrichtung am Schiffskörper eingearbeiteten wechselweise konkav-konvexen Strukturen zur Vortexverhinderung bekannt.

JP 59-156881 offenbart die Anordnung rotierender Walzen im Heckbereich mit dem Ziel der Grenzschichtbeeinflussung.

Der Erfindung lag daher die Aufgabe zugrunde, ein Wasserfahrzeug, insbesondere ein Schleppschiff mit zumindest einem Antrieb derart weiterzuentwickeln, dass die Steuerbarkeit dessen immer sicher gewährleistet und die Gierstabilität gegeben ist. Dabei sind die negativen Effekte der Wirbelbildung in Strömungsrichtung im Heckbereich unabhängig von der Ausführung und dem Design des Schiffskörpers des Wasserfahrzeuges mit einfachen Mitteln zu reduzieren. Insbesondere soll die erfindungsgemäße Lösung auch an bestehenden Wasserfahrzeugen, an welchen Stabilisierungsprobleme unter bestimmten Randbedingungen beobachtet werden, mit geringem Aufwand nachrüstbar sein.

Die erfindungsgemäße Lösung ist durch die Merkmale des Anspruchs 1 charakterisiert. Vorteilhafte Ausbildungen sind in den Unteransprüchen beschrieben.

Ein erfindungsgemäß ausgeführtes Wasserfahrzeug, insbesondere Schleppschiff mit einem Schiffskörper mit einer aus einer Bordwand und einem Schiffsboden gebildeten Schiffshülle und zumindest einer im Heckbereich des Schiffskörpers angeordneten Stabilisierungseinrichtung ist dadurch gekennzeichnet, dass die Stabilisierungseinrichtung gemäß einer Grundausführung zumindest einseitig der Mittellängsebene des Schiffskörpers ein bündig an der Schiffshülle anliegendes und sich ausgehend von einer Basis am Schiffsboden betrachtet über zumindest einen Teilbereich der Schiffshülle in Höhenrichtung entlang einer theoretischen Anordnungslinie erstreckendes strömungsbeeinflussendes Element mit um die Anordnungslinie ausgebildeter Anströmfläche umfasst.

In einer besonders vorteilhaften Ausführung umfasst die Stabilisierungseinrichtung beidseitig der Mittellängsebene des Schiffskörpers jeweils zumindest ein bündig an der Schiffshülle anliegendes und sich ausgehend von einer Basis am Schiffsboden betrachtet über zumindest einen Teilbereich der Schiffshülle in Höhenrichtung entlang einer theoretischen Anordnungslinie erstreckendes strömungsbeeinflussendes Element mit einer um die Anordnungslinie ausgebildeten Anströmfläche.

Unter einem Schiffskörper wird hier der Teil des Wasserfahrzeuges verstanden, welcher diesem die Schwimmfähigkeit verleiht. Dieser wird auch als Schiffsrumpf bezeichnet. Die Basis entspricht einer Horizontalebene am tiefsten Punkt des Schiffsbodens.

Unter einem Rundheck ist ein rund zulaufendes Schiffsheck zu verstehen. Der Begriff umfasst unterschiedliche Ausführungen, welche alle durch einen gekrümmten Verlauf des Schiffskörpers, insbesondere in einer Ansicht von oben auf die einzelnen Schnittebenen, welche senkrecht zur Mittellängsebene ausgerichtet sind, charakterisiert sind. Dieser unterscheidet sich grundlegend von einer Ausführung mit Spiegelheck. Zu den Rundheckformen gehören auch elliptisch geformte Heckformen, das sogenannte Schlepperheck und das Kreuzerheck, welches sich durch einen S-förmigen Achtersteven auszeichnet, der sich weiter oben zur Bordwand hin nach innen zieht. Unter einem Spitzheck wird ein spitz zulaufendes Schiffsheck verstanden.

Die Kernidee der Erfindung besteht darin, am Schiffskörper im Heckbereich, welcher durch eine Heckform mit gekrümmten Verlauf, insbesondere rund- oder spitz zulaufender Heckform charakterisiert ist, zumindest einseitig oder vorzugsweise beidseitig der Mittellängsebene ein strömungsbeeinflussendes Element in Form eines Vorsprungkörpers mit einer Strömungsführungsfläche vorzusehen, durch welche die Ablösung gegenläufiger Wirbelpaare am Schiffskörper im Heckbereich reduziert wird. Durch das bündige Anliegen des strömungsbeeinflussenden Elementes und damit des Übergehens der Oberfläche an der Schiffshülle in die Anströmfläche wird diese Wirbelbildung im Heckbereich aktiv gestört. Die prominente bzw. hervorgehobene Frequenz der ursprünglichen Wirbelablösung wird durch die neuerlich erzwungene Ablösung stromaufwärts derart verändert, dass nunmehr ein breiteres Spektrum von Ablösefrequenzen vorliegt, so dass die Anregung einer Gierschwingung erheblich reduziert wird. Das Strömungsbild im Heckbereich und hinter dem Wasserfahrzeug wird positiv beeinflusst und damit die Gierstabilität und Steuerbarkeit derartiger Wasserfahrzeuge mit einfachen Mitteln erheblich verbessert. Das einzelne strömungsbeeinflussende Element ist als separates Bauteil ohne Beeinträchtigung anderer Funktionselemente am Wasserfahrzeug nachrüstbar. Für dessen Anordnung stehen große Flächenbereiche im Heckbereich am Außenumfang der die Außenhaut bildenden Schiffshülle zur Verfügung.

Mit der erfindungsgemäßen Anordnung der strömungsbeeinflussenden Elemente sind mit einfachen, kostengünstigen und vor allem nachrüstbaren Mitteln in einem Bereich, welcher ansonsten durch eine undefinierten Abriss der Strömung charakterisiert ist, definierte Strömungsabrissverhältnisse einstellbar.
Diese Elemente haben einen sehr geringen Einfluss auf den Schiffswiderstand; ihre entscheidende Aufgabe ist die Verhinderung der Entstehung einer Karmanschen Wirbelstrasse. Der Effekt der Karmanschen Wirbelstrasse tritt vorrangig bei Schleppfahrzeugen mit Rundheck auf und war in der Fachwelt hinsichtlich seiner starken Auswirkung auf die Steuerbarkeit des Schiffes bisher unbekannt. Durch die erfindungsgemäße Anordnung der strömungsbeeinflussenden Elemente wird die Bildung der Karmanschen Wirbelstrasse weitestgehend verhindert und die Steuerbarkeit des Schiffes erheblich verbessert bzw. erst ermöglicht..

Das einzelne sich über einen Teilbereich des Schiffskörpers in Höhenrichtung erstreckende strömungsbeeinflussende Element ist derart angeordnet, dass dessen Anordnungslinie in Höhenrichtung der Schiffshülle ausgehend von einer Basis am Schiffsboden betrachtet mit ihrer Hauptrichtungskomponente in Höhenrichtung und damit nicht nur in einer Ebene verläuft. Dadurch ist es möglich, größere Anströmflächen über den gleichen Höhenbereich bereitzustellen und die Anströmflächen über einen breiteren Bereich der Schiffshülle zu positionieren.

In einer vorteilhaften Ausbildung ist vorgesehen, dass der Abstand der Anordnungslinie für das einzelne strömungsbeeinflussende Element von der Mittellängsebene des Schiffskörpers im zur Basis weisenden Endbereich geringer ist als im von der Basis in Höhenrichtung betrachtet wegweisenden Endbereich. Neben einer Vergrößerung der Anströmfläche über einen Höhenbereich vordefinierter Größe an der Schiffshülle werden die Anströmflächen damit in einen Bereich verlegt, in welchem diese eine größere Wirksamkeit entfalten können.

In einer besonders vorteilhaften Ausbildung einer Anordnung des strömungsbeeinflussenden Elementes mit einer Hauptrichtungskomponente in vertikaler Richtung (wobei dann eine Nebenrichtungskomponente in horizontaler Richtung verläuft), weist die Anordnungslinie bei Projizierung in eine parallel zur Mittellängsebene ausgerichtete Längsebene einen Winkel gegenüber einer zur Mittellängsebene senkrecht ausgerichteten Ebene im Bereich von 5° bis 50°, bevorzugt 10° bis 45°, ganz besonders bevorzugt 25°± 10°auf. Zusätzlich oder aber für sich allein als Merkmal betrachtet, ist die Lage der Anordnungslinie bei Projizierung in eine senkrecht zur Mittellängsebene ausgerichtete Ebene durch einen Winkel zur Mittellängsebene im Bereich von 5° bis 50°, bevorzugt von 10° bis 45°, ganz besonders bevorzugt 25°± 10°charakterisiert. Diese Winkelbereiche beschreiben die Anordnung und Ausbildung der strömungsbeeinflussenden Elemente mit der besten Wirkungsweise, um die Rumpfumströmung effektiv zu beeinflussen.

Bezüglich der Ausbildung und/oder Anordnung eines einzelnen strömungsbeeinflussenden Elementes besteht eine Mehrzahl von Möglichkeiten. In Höhenrichtung des Schiffskörpers betrachtet ist das einzelne strömungsbeeinflussende Element gemäß einer der nachfolgenden Möglichkeiten erstreckend angeordnet:
- ausgehend von einer Basis am Schiffsboden betrachtet von dieser bis zur theoretischen Konstruktionswasserlinie; (Vorteil der Wirkung über gesamte Höhe der Schiffshülle)
- ausgehend von einer Basis am Schiffsboden betrachtet in einem vordefinierten Abstand zu dieser bis zur theoretischen Konstruktionswasserlinie;
- ausgehend von einer Basis am Schiffsboden betrachtet von dieser über einen Teilbereich von 1/3 bis 2/3 der Erstreckung des Schiffskörpers in Höhenrichtung;
- ausgehend von einer Basis am Schiffsboden betrachtet in einem vordefinierten Abstand von dieser über einen Teilbereich von 1/3 bis 2/3 der Erstreckung des Schiffskörpers in Höhenrichtung.

Unter der theoretischen Konstruktionswasserlinie wird dabei die beim Eintauchen des Schiffskörpers in Wasser durch dieses am Außenumfang sich abzeichnende Wasserlinie in idealisierter Form, d.h. frei von Störeinflüssen verstanden.

Bei Ausführungen von strömungsbeeinflussenden Elementen mit einer geringeren Größe bzw. Längserstreckung als die Erstreckung des Schiffskörpers in Höhenrichtung bis zur Konstruktionswasserlinie können entweder nur ein oder aber mehrere, die gesamte Erstreckung der Schiffshülle in Höhenrichtung bis zur Konstruktionswasserlinie hintereinander angeordnete Elemente vorgesehen werden.

Bezüglich der Anordnung in Verlaufsrichtung der Konstruktionswasserlinie entlang erfolgt die Anordnung vorzugsweise derart, dass das einzelne strömungsbeeinflussende Element bzw. die Anordnungslinie dessen in einem Bereich bezogen auf eine Konstruktionswasserlinie am Außenumfang des Schiffskörpers betrachtet ausgehend von der Mittellängsebene von 1% bis 30% der Länge der Konstruktionswasserlinie vom Heck aus gesehen angeordnet ist. Mit der Anordnung innerhalb diesen Bereiches ist sichergestellt, dass die Anordnung in Strömungsrichtung immer hinter dem Ablösebereich erfolgt.

Besonders vorteilhaft ist es, wenn das einzelne strömungsbeeinflussende Element bzw. die Anordnungslinie des einzelnen strömungsbeeinflussenden Elementes ausgehend von einer theoretischen Ablöselinie der Strömung am Schiffskörper (2) in einem stromaufwärts liegenden Abstand von ca.10-30cm verlaufend angeordnet ist. In diesem Bereich ist das strömungsbeeinflussende Element besonders wirksam.

Die beidseitig der Mittellängsebene erfolgende Anordnung der strömungsbeeinflussenden Elemente erfolgt vorzugsweise symmetrisch. Dadurch wird ein möglichst ebenmäßiges Strömungsbild erzielt.

Die Anströmfläche des einzelnen Elementes um die Anordnungslinie ist zur effektiven Strömungsbeeinflussung gekrümmt verlaufend ausgebildet. Je nach Ausführung kann die Querschnittsfläche, des strömungsbeeinflussenden Elementes, insbesondere deren Außenumfang durch einen Radius oder mehrere Radien beschrieben werden. Über die Radienwahl ist zum einen die Größe als auch die Ausrichtung und der Verlauf der Anströmfläche einstellbar. Die einzelne Anströmfläche stellt dabei keine vollständig in Umfangsrichtung geschlossene Fläche dar.

Das einzelne strömungsbeeinflussende Element kann ferner ein- oder mehrteilig ausgebildet sein. Vorzugsweise werden einteilig ausgebildete und hinsichtlich der Kontur und Querschnittsgeometrie einfache Ausführungen verwendet. Diese erlauben ein einfaches Handling und sind je nach Ausbildung des Querschnittsprofiles des einzelnen strömungsführenden Elementes besonders einfach und kostengünstig herstellbar. Gemäß der Erfindung ist das einzelne strömungsbeeinflussende Element als Vollprofilelement oder Hohlprofilelement, insbesondere Stangen oder Rohrprofilelement ausgebildet.

Die Befestigung an der Schiffshülle erfolgt vorzugsweise unlösbar, um den Kontrollaufwand so gering wie möglich zu halten. Denkbar sind auch lösbare Ausführungen. Gemäß einer besonders vorteilhaften Ausführung erfolgt die Befestigung formschlüssig, beispielsweise über Nietverbindungen - oder stoffschlüssig, beispielsweise Schweißverbindungen.

Als Materialien für die Ausbildung der strömungsbeeinflussenden Elemente finden vor Allem Stahl oder Edelstahl Verwendung.

Die erfindungsgemäße Lösung ist nachfolgend anhand von Figuren erläutert. Es zeigen:
- Figur 1a: ein Wasserfahrzeug mit erfindungsgemäß ausgebildeter Stabilisierungseinrichtung in einer Ansicht auf die Mittellängsachsebene;
- Figur 1b: ein Wasserfahrzeug mit erfindungsgemäß ausgebildeter Stabilisierungseinrichtung gemäß Grundausführung in einer Ansicht auf das Heck des Schiffskörpers;
- Figur 1c: ein Wasserfahrzeug mit erfindungsgemäß ausgebildeter Stabilisierungseinrichtung gemäß einer vorteilhaften Weiterbildung der Grundausführung in einer Ansicht auf das Heck des Schiffskörpers;
- Figuren 2a und 2b: in einem einen Ausschnitt aus den Figuren 1a und 1b die Winkel zwischen strömungsbeeinflussenden Elementen und einzelnen Ebenen;
- Figur 3: ein strömungsbeeinflussendes Element in zwei Ansichten;
- Figur 4: eine weitere Ausbildung eines strömungsbeeinflussenden Elementes;
- Figuren 5a bis 5c: verschiedene Querschnittskonturen eines strömungsbeeinflussenden Elementes;
- Figur 6a: eine Ausführung eines Wasserfahrzeuges mit Anordnung eines strömungsbeeinflussenden Elementes im Bereich der Konstruktionswasserlinie;
- Figur 6b: eine Ausführung eines Wasserfahrzeuges mit Ausbildung eines strömungsbeeinflussenden Elementes aus mehreren Teilelementen.

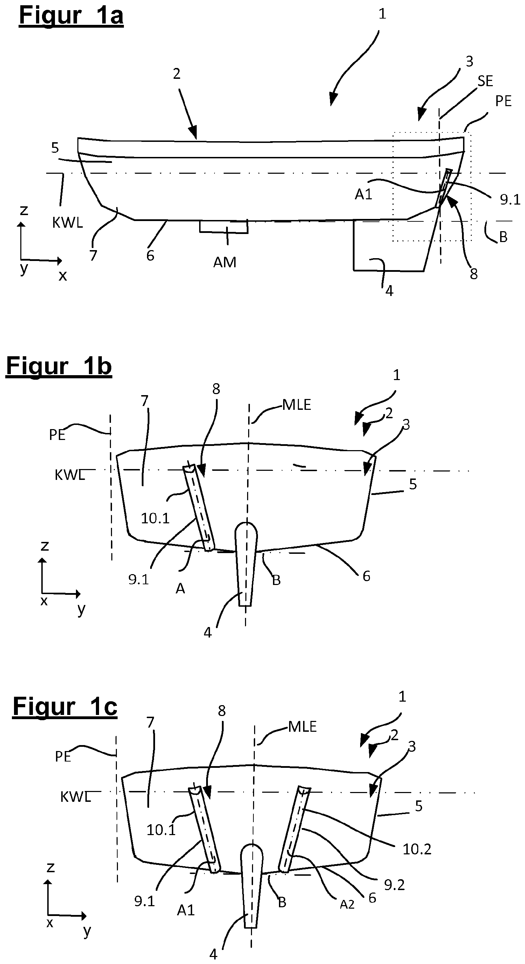

Die Figuren 1a bis 1c verdeutlichen in schematisiert stark vereinfachter Darstellung einen Schiffskörper 2 eines Wasserfahrzeuges 1, insbesondere eines Schleppschiffes in zwei Ansichten. Die Figur 1a zeigt eine Ansicht auf den Schiffskörper 2 in Längsrichtung, die Figuren 1b und 1c jeweils eine Ansicht in Breitenrichtung für eine Grundausführung und eine vorteilhafte Weiterbildung. Der Schiffskörper 2 ist durch eine Erstreckung in Längsrichtung vom Bug zum Heck 3 und eine Erstreckung in Breitenrichtung charakterisiert. Der Schiffskörper 2 ist im Heckbereich durch eine Ausbildung als Rund- oder Spitzheck charakterisiert. Die Erstreckung in vertikaler Richtung wird nachfolgend als Höhenrichtung bezeichnet. Zur Verdeutlichung der Richtungen ist beispielhaft ein Koordinatensystem an den Schiffskörper 2 angelegt. Die X-Achse entspricht der Erstreckung in Längsrichtung, die Y-Achse der Erstreckung in Breitenrichtung und die Z-Richtung beschreibt die Erstreckung in Höhenrichtung. Das Wasserfahrzeug weist ferner zumindest einen Antrieb AM auf, welcher verschiedenartig ausgebildet sein kann.

Der Heckbereich 3 ist beispielhaft, jedoch nicht zwingend mit einer Finne 4 zur Richtungsstabilisierung ausgebildet. Der Schiffskörper 2 umfasst eine aus einer Bordwand 5 und einem Schiffsboden 6 gebildeten Schiffshülle 7. Zur Vermeidung der durch die bei der Umströmung des Schiffskörpers 2 sich ausbildenden Karmanschen Wirbelstraße bedingten Instabilitäten ist im Heckbereich 3 des Schiffskörpers 2 eine Stabilisierungseinrichtung 8 vorgesehen. Die Stabilisierungseinrichtung 8 umfasst gemäß Figur 1b einseitig und gemäß Figur 1c beidseitig der Mittellängsebene MLE des Schiffskörpers 2 jeweils zumindest ein bündig an der Schiffshülle 7 anliegendes und sich ausgehend von einer Basis B am Schiffsboden 6 betrachtet über zumindest einen Teilbereich der Schiffshülle 7 in Höhenrichtung dieser sich entlang einer theoretischen Anordnungslinie erstreckendes strömungsbeeinflussendes Element 9.1, 9.2. Die Anordnungslinien sind hier jeweils mit A1 für 9.1 und A2 für 9.2 bezeichnet. Die theoretischen Anordnungslinien A1, A2 sind nicht figürlich bzw. als Bauteil zu verstehen sondern dienen der Beschreibung des Verlaufs bzw. die Erstreckung des einzelnen strömungsbeeinflussenden Elementes 9.1, 9.2 an der Schiffshülle 7. Die Anordnungslinien A1, A2 beschreiben dabei den grundsätzlichen Verlauf bzw. Ausrichtung der strömungsbeeinflussenden Elemente 9.1, 9.2. Diese sind nicht zu verwechseln mit Mittellinien oder ggf. Symmetrielinien bei Beschreibung der Ausbildung der strömungsbeeinflussenden Elemente 9.1, 9.2. Figur 1b zeigt eine Grundausführung mit einseitiger Anordnung eines Elementes 9.1, Figur 1c verdeutlicht eine besonders vorteilhafte Weiterbildung mit beidseitiger Anordnung der strömungsbeeinflussenden Elemente von 9.1, 9.2.

Das einzelne strömungsbeeinflussende Element 9.1, 9.2 ist vorzugsweise als separates Bauteil ausgeführt, welches mit einem Flächenbereich bündig an der Schiffshülle 7 anliegt und in Einbaulage mit dieser verbunden ist. Die Verbindung kann lösbar oder unlösbar ausgebildet sein. Vorzugsweise werden unlösbare stoffschlüssige oder formschlüssige Verbindungen gewählt. Das einzelne strömungsbeeinflussende Element 9.1, 9.2 ist durch eine Erstreckung in Längsrichtung charakterisiert. Die Formgebung Die durch die Erstreckung beschriebe Kontur in Längsrichtung ist durch eine Konturlinie beschreibbar, die in Einbaulage am Schiffskörper 2 mit der theoretischen Anordnungslinie A1, A2 zusammenfällt bzw. dieser entspricht. Das einzelne strömungsbeeinflussende Element 9.1, 9.2 weist eine Anströmfläche 10.1, 10.2 auf. Diese erstreckt sich dabei über die Erstreckung des einzelnen strömungsbeeinflussenden Elementes 9.1, 9.2 in Höhenrichtung des Schiffskörpers 2 betrachtet. Die Anströmfläche 10.1, 10.2 ist derart ausgerichtet, dass diese in Einbaulage des strömungsbeeinflussenden Elementes 9.1, 9.2 betrachtet jeweils um die Anordnungslinie A1, A2 verlaufend ausgebildet ist. Bei dieser handelt es sich zur gezielten Strömungsbeeinflussung um eine gekrümmt ausgebildete Fläche Bündiges Anliegen beinhaltet, dass zwischen der Anströmfläche am strömungsbeeinflussenden Element 9.1, 9.2 und der Schiffshülle 7 kein Zwischenraum besteht, sondern quasi ein Übergang von der Außenumfangsfläche am Schiffkörper 7 zur Anströmfläche 10.1, 10.2 gegeben ist.. Die Anströmfläche ist daher in Umfangsrichtung um die Anordnungslinie A1, A2 nicht geschlossen ausgebildet.

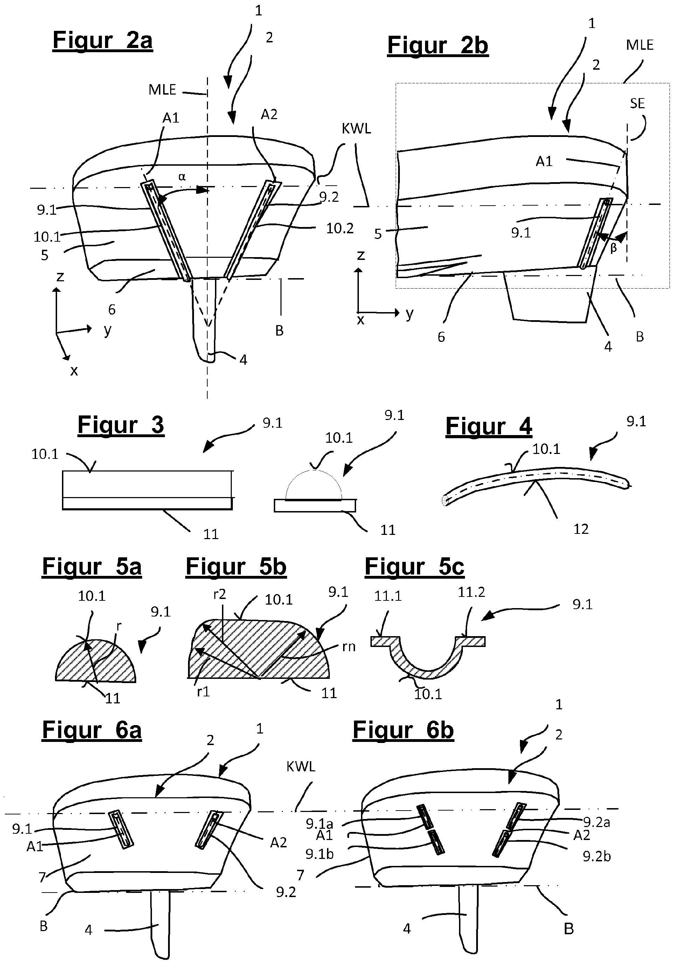

Die einzelne Anordnungslinie A1, A2 für das einzelne strömungsbeeinflussende Element 9.1, 9.2 verläuft in Höhenrichtung der Schiffshülle 7 ausgehend von einer Basis B am Schiffsboden 6 betrachtet mit ihrer Hauptrichtungskomponente in Höhenrichtung. D.h. das einzelne strömungsbeeinflussende Element 9.1 bzw. 9.2 kann sich angepasst an die Kontur der Schiffshülle 7 an dieser entweder in einer senkrecht zur Mittellängsebene MLE angeordneten Ebene oder aber über mehrere derartige senkrecht zur Mittellängsebene MLE angeordnete Ebenen erstrecken und erstreckt sich auch nicht nur in einer parallelen Ebene zur Mittellängsebene MLE. Die Lage bzw. Ausrichtung der strömungsbeeinflussenden Elemente 9.1, 9.2 und damit der Anordnungslinien A1, A2 dieser am Schiffkörper 7 kann durch Winkelangaben gegenüber verschieden ausgerichteten Ebenen beschrieben werden. Diese sind in den Figuren 2a und 2b beispielhaft wiedergegeben. Die Figuren 2a und 2b zeigen beispielhaft anhand eines Ausschnittes aus einem Wasserfahrzeug 1 den Schiffskörper 2 gemäß den Figuren 1a und 1b in unterschiedlichen Ansichten. Die Figur 2a zeigt einen Ausschnitt aus Figur 1b und verdeutlicht den Winkel α zwischen der Mittellängsebene MLE und dem strömungsführenden Element 9.1 bei Projizierung dieses bzw. Projizierung der Anordnungslinie A1 in eine Ebene SE senkrecht zur Mittellängsebene MLE. Dieser liegt erfindungsgemäß im Bereich von 5° bis 50°, bevorzugt von 10° bis 45°, ganz besonders bevorzugt 25°± 10. Figur 2b verdeutlicht einen Ausschnitt aus Figur 1a und gibt den Winkel β zwischen der Anordnungslinie bei Projizierung in eine parallel zur Mittellängsebene ausgerichtete Längsebene gegenüber einer zur Mittellängsebene senkrecht ausgerichteten Ebene wieder. Dieser liegt erfindungsgemäß im Bereich von 5° bis 50°, bevorzugt 10° bis 45°, ganz besonders bevorzugt 25°± 10°.

Das einzelne strömungsbeeinflussende Element 9.1, 9.2 erstreckt sich gemäß einer besonders vorteilhaften Ausbildung in Figur 1a, 1b, 2a, 2b in Höhenrichtung des Schiffskörpers 2 betrachtet über einen Bereich, der sich von einer theoretischen Konstruktionswasserlinie KWL am Schiffskörper 2 über bis zur Basis B erstreckt.

Demgegenüber zeigen die Figuren 6a und 6b weitere Möglichkeiten, welche ebenfalls eine Reduzierung der Wirbelablösung erzielt wird. Bei diesen sind die einzelnen strömungsbeeinflussenden Elemente 9.1, 9.2 bzw. 9.1a, 9.1b und 9.2a, 9.2b nur in einem Teilbereich der Erstreckung der Schiffshülle 7 in Höhenrichtung angeordnet.
Die Figur 6a zeigt eine Ausführung mit Anordnung jeweils eines einzelnen strömungsbeeinflussenden Elementes 9.1, 9.2 im Bereich der Konstruktionswasserlinie KWL und Erstreckung nur im Bereich dieser. Demgegenüber zeigt Figur 6b eine Anordnung mit mehreren auf einer Anordnungslinie A1, A2 angeordneten strömungsbeeinflussenden Elementen 9.1a, 9.1b und 9.2a, 9.2b. Diese sind in Höhenrichtung hintereinander unter Ausbildung eines Abstandes zueinander oder aber - hier nicht dargestellt - bündig aneinander anschließend angeordnet. Demgegenüber ist es auch möglich, die Anordnung der strömungsbeeinflussenden Elemente 9.1, 9.2 anstatt im Bereich der Konstruktionswasserlinie KWL nur in einem Teilbereich im Bereich der Basis B vorzunehmen. Vorzugsweise wird jedoch bei Ausführungen mit derart verkürzt ausgebildeten strömungsbeeinflussenden Elementen 9.1, 9.2 eine Ausbildung mit einer Länge gewählt, die geeignet ist, zumindest ein Drittel der Erstreckung der Schiffshülle 7 in Höhenrichtung abzudecken.

Die Zusammenstellung einer Einheit aus mehreren einzelnen strömungsbeeinflussenden Elementen 9.1a, 9.1b bzw. 9.2a, 9.2b bietet den Vorteil, standardisiert ausgebildete strömungsbeeinflussende Elemente 9.1, 9.2 vorzuhalten und die erforderlichen Längserstreckungen dieser durch modulare Zusammenfassung zu erzielen.

Die Anordnung der strömungsbeeinflussenden Elemente 9.1, 9.2 erfolgt vorzugsweise symmetrisch bezüglich der Mittellängsebene MLE.

Die Ausbildung der strömungsbeeinflussenden Elemente 9.1, 9.2, insbesondere deren Kontur in Längsrichtung dieser betrachtet, ist im wesentlichen von der Kontur des Schiffkörpers 2, insbesondere der Schiffshülle 7 im gewünschten Anordnungsbereich abhängig. Je nach Ausbildung der Anordnungsflächen an der Schiffshülle 7 als ebene oder gekrümmte Fläche ist das einzelne strömungsbeeinflussende Element 9.1, 9.2 ebenfalls mit einer ebenen Anlagefläche 11, wie in Figur 3 wiedergegeben oder aber gekrümmt ausgebildeter Anlagefläche 12 ausgebildet.

Die Figuren 5a bis 5c zeigen beispielhaft im Querschnitt betrachtet mögliche Ausbildungen der Anströmfläche 10.1, 10.2 der strömungsbeeinflussenden Elemente 9.1, 9.2. Gemäß Figur 5a ist das einzelne strömungsbeeinflussende Element 9.1 mit konstantem Querschnitt über dessen Erstreckung in Längsrichtung ausgebildet und weist einen kreissegmentförmigen Querschnitt auf. Das einzelne strömungsbeeinflussende Element 9 .1 kann als Profilelement oder wie in Figur 5a wiedergegeben als Vollelement ausgebildet sein. Die Ausbildung mit kreissegmentartigem Querschnitt ist durch einen Radius r charakterisiert. Demgegenüber zeigt Figur 5b eine Ausbildung mit einer Querschnittsfläche, deren Außenumfang durch unterschiedliche Radien r1 bis rn charakterisierbar ist. Dadurch können bei gleichgroßer Anlagefläche 11 größere Anströmflächen 10.1 realisiert werden.

Figur 5c zeigt eine Ausführung des strömungsbeeinflussenden Elementes 9.1 als Hohlprofilelement, insbesondere Halbrohres. Die Anströmfläche 10.1 sowie die Anlageflächen 11.1a, 11.1b werden durch Umformen, beispielsweise einfache Blechbearbeitung herausgearbeitet.

### Bezugszeichenliste

- 1: Wasserfahrzeug
- 2: Schiffskörper
- 3: Heckbereich
- 4: Finne
- 5: Bordwand
- 6: Schiffsboden
- 7: Schiffshülle
- 8: Stabilisierungseinrichtung
- 9.1,9.2 9.1a, 9.1b: strömungsbeinflussende Elemente
- 10.1, 10.2: Anströmflächen
- 11,11.1,11.2: Anlageflächen
- 12: Anlageflächen

- A1, A2: Anordnungslinie
- AM: Antrieb
- B: Basis
- KWL: Konstruktionswasserlinie
- MLE: Mittellängsebene
- SE: Ebene senkrecht zur Mittellängsebene MWL
- PE: Ebene parallel zur Mittellängsebene MWL

## Patentansprüche

1. Wasserfahrzeug (1), insbesondere Schleppschiff mit einem Schiffskörper (2) mit einer aus einer Bordwand (5) und einem Schiffsboden (6) gebildeten Schiffshülle (7), wobei die Heckform des Schiffskörpers als Rund- oder Spitzheck ausgebildet ist und zumindest im Heckbereich (3) des Schiffskörpers (2) eine Stabilisierungseinrichtung (8) angeordnet ist,
**dadurch gekennzeichnet,**
**dass** die Stabilisierungseinrichtung (8) im Heckbereich einseitig der Mittellängsebene (MLE) des Schiffskörpers (2) ein bündig an der Schiffshülle (7) anliegendes und sich ausgehend von einer Basis (B) am Schiffsboden (6) betrachtet über zumindest einen Teilbereich der Schiffshülle (7) in Höhenrichtung entlang einer theoretischen Anordnungslinie (A1, A2) erstreckendes strömungsbeeinflussendes Element (9.1, 9.2) mit um die Anordnungslinie (A1, A2) ausgebildeter Anströmfläche (10.1, 10.2) umfasst, wobei das einzelne strömungsbeeinflussende Element (9.1, 9.2) als Vollprofilelement oder Hohlprofilelement, insbesondere Stangen oder Rohrprofilelement ausgebildet ist und die Anströmfläche (A1, A2) des einzelnen strömungsbeeinflussenden Elementes (9.1, 1.2) um die Anordnungslinie (A1, A2) gekrümmt verlaufend ausgebildet ist, wobei die Krümmung durch einen Radius (r) oder mehrere Radien (r1 bis rn) beschreibbar ist

2. Wasserfahrzeug (1) nach Anspruch 1,
**dadurch gekennzeichnet,**
**dass** beidseitig der Mittellängsebene (MLE) des Schiffskörpers (2) jeweils zumindest ein bündig an der Schiffshülle (7) anliegendes und sich ausgehend von einer Basis (B) am Schiffsboden (6) betrachtet über zumindest einen Teilbereich der Schiffshülle (7) in Höhenrichtung entlang einer theoretischen Anordnungslinie (A1, A2) erstreckendes strömungsbeeinflussendes Element (9.1, 9.2) mit um die Anordnungslinie (A1, A2) ausgebildeter Anströmfläche (10.1, 10.2) umfasst.

3. Wasserfahrzeug (1) nach Anspruch 1 oder 2,
**dadurch gekennzeichnet,**
**dass** die Anordnungslinie (A1, A2) für das einzelne strömungsbeeinflussende Element (9.1, 9.2) in Höhenrichtung der Schiffshülle (7) ausgehend von einer Basis (B) am Schiffsboden (6) betrachtet mit ihrer Hauptrichtungskomponente in Höhenrichtung verläuft.

4. Wasserfahrzeug (1) nach Anspruch 1 oder 2,
**dadurch gekennzeichnet,**
**dass** der Abstand der Anordnungslinie (A1, A2) für das einzelne strömungsbeeinflussende Element (9.1, 9.2) von der Mittellängsebene (MLE) des Schiffskörpers (2) im zur Basis weisenden Endbereich geringer ist als im von der Basis (B) in Höhenrichtung betrachtet wegweisenden Endbereich.

5. Wasserfahrzeug (1) nach einem der Ansprüche 1 bis 4,
**dadurch gekennzeichnet,**
**dass** die Anordnungslinie (A1, A2) bei Projizierung in eine parallel zur Mittellängsebene (MLE) ausgerichtete Längsebene einen Winkel (β) gegenüber einer zur Mittellängsebene (MLE) senkrecht ausgerichteten Ebene (SE) im Bereich von 5° bis 50°, bevorzugt 10° bis 45°, ganz besonders bevorzugt 25°± 10° aufweist.

6. Wasserfahrzeug (1) nach einem der Ansprüche 1 bis 5,
**dadurch gekennzeichnet,**
**dass** die Anordnungslinie (A1, A2) bei Projizierung in eine senkrecht zur Mittellängsebene (MLE) ausgerichtete Ebene (SE) einen Winkel (α) zur Mittellängsebene (MLE) im Bereich von 5° bis 50°, bevorzugt von 10° bis 45°, ganz besonders bevorzugt 25°± 10° aufweist.

7. Wasserfahrzeug (1) nach einem der Ansprüche 1 bis 6,
**dadurch gekennzeichnet,**
**dass** das einzelne strömungsbeeinflussende Element (9.1, 9.2) sich in Höhenrichtung des Schiffskörpers (2) betrachtet gemäß einer der nachfolgenden Möglichkeiten erstreckend angeordnet ist:
- ausgehend von einer Basis (B) am Schiffsboden (6) betrachtet von dieser bis zur theoretischen Konstruktionswasserlinie (KWL);
- ausgehend von einer Basis (B) am Schiffsboden (6) betrachtet in einem vordefinierten Abstand zu dieser bis zur theoretischen Konstruktionswasserlinie (KWL);
- ausgehend von einer Basis (B) am Schiffsboden (6) betrachtet von dieser über einen Teilbereich von 1/3 bis 2/3 der Erstreckung des Schiffskörpers (2) in Höhenrichtung;
- ausgehend von einer Basis (B) am Schiffsboden (6) betrachtet in einem vordefinierten Abstand von dieser über einen Teilbereich von 1/3 bis 2/3 der Erstreckung des Schiffskörpers in Höhenrichtung.

8. Wasserfahrzeug (1) nach einem der vorgenannten Ansprüche,
**dadurch gekennzeichnet,**
**dass** das einzelne strömungsbeeinflussende Element (9.1, 9.2) bzw. die Anordnungslinie in einem Bereich bezogen auf eine Konstruktionswasserlinie (KWL) am Außenumfang des Schiffskörpers (2) betrachtet ausgehend von der Mittellängsebene (MLB) von 1% und 30% der Länge der Konstruktionswasserlinie (KWL) vom Heck aus gesehen angeordnet ist.

9. Wasserfahrzeug (1) nach einem der vorgenannten Ansprüche,
**dadurch gekennzeichnet,**
**dass** das einzelne strömungsbeeinflussende Element (9.1, 9.2) bzw. die Anordnungslinie des einzelnen strömungsbeeinflussenden Elementes (9.1, 9.2) ausgehend von einer theoretischen Ablöselinie der Strömung am Schiffskörper (2) in einem stromaufwärts liegenden Abstand von ca. 10-30cm verlaufend angeordnet ist.

10. Wasserfahrzeug (1) nach einem der vorgenannten Ansprüche,
**dadurch gekennzeichnet,**
**dass** jeweils eine Mehrzahl einzelner strömungsbeeinflussender Elemente (9.1a, 9.1b, 9.2a, 9.2b) beidseitig der Mittellängsebene (MLE) in Reihe entlang einer Anordnungslinie (A1, A2) angeordnet sind.

11. Wasserfahrzeug (1) nach einem der vorhergehenden Ansprüche,
**dadurch gekennzeichnet,**
**dass** das einzelne strömungsbeeinflussende Element (9.1, 9.2) zumindest eine Anlagefläche zum bündigen Anliegen an der Schiffshülle (7) aufweist und form- oder stoffschlüssig mit dieser verbunden ist.

12. Wasserfahrzeug (1) nach einem der vorhergehenden Ansprüche,
**dadurch gekennzeichnet,**
**dass** dieses zumindest einen Antrieb, vorzugsweise zwei beidseits der Mittellängsebene angeordnete steuerbare Antriebseinheiten aufweist.

## Claims

1. Watercraft (1), in particular towboat with a ship's body (2) with a ship's hull (7) which is formed from a ship's side (5) and a ship's floor (6), the rear shape of the ship's body being configured as a round stern or sharp stern, and a stabilization device (8) being arranged at least in the stern region (3) of the ship's body (2), **characterized in that** the stabilization device (8), in the stern region on one side of the centre longitudinal plane (MLE) of the ship's body (2), comprises a flow-influencing element (9.1, 9.2) which bears flush against the ship's hull (7) and, as viewed starting from a base (B) on the ship's floor (6), extends over at least a part region of the ship's hull (7) in the vertical direction along a theoretical arrangement line (A1, A2), with an incident flow face (10.1, 10.2) which is configured around the arrangement line (A1, A2), the individual flow-influencing element (9.1, 9.2) being configured as a solid profile element or hollow profile element, in particular rods or a tubular profile element, and the incident flow face (A1, A2) of the individual flow-influencing element (9.1, 1.2) being configured so as to run in a curved manner around the arrangement line (A1, A2), it being possible for the curvature to be described by way of a radius (r) or a plurality of radii (r1 to rn).

2. Watercraft (1) according to Claim 1, **characterized in that** comprises in each case at least one flow-influencing element (9.1, 9.2) which bears flush against the ship's hull (7) and, as viewed starting from a base (B) on the ship's floor (6), extends over at least a part region of the ship's hull (7) in the vertical direction along a theoretical arrangement line (A1, A2), with an incident flow face (10.1, 10.2) which is configured around the arrangement line (A1, A2), on both sides of the centre longitudinal plane (MLE) of the ship's body (2) .

3. Watercraft (1) according to Claim 1 or 2, **characterized in that** the arrangement line (A1, A2) for the individual flow-influencing element (9.1, 9.2) runs, with its main directional component in the vertical direction, in the vertical direction of the ship's hull (7), as viewed starting from a base (B) on the ship's floor (6).

4. Watercraft (1) according to Claim 1 or 2, **characterized in that** the spacing of the arrangement line (A1, A2) for the individual flow-influencing element (9.1, 9.2) from the centre longitudinal plane (MLE) of the ship's body (2) is smaller in the end region which points towards the base than in the end region which points away from the base (B), as viewed in the vertical direction.

5. Watercraft (1) according to one of Claims 1 to 4, **characterized in that**, in the case of a projection into a longitudinal plane which is oriented parallel to the centre longitudinal plane (MLE), the arrangement line (A1, A2) has an angle (β) with respect to a plane (SE) which is oriented perpendicularly with respect to the centre longitudinal plane (MLE), which angle (β) is in the range from 5° to 50°, preferably from 10° to 45°, very particularly preferably 25° ± 10°.

6. Watercraft (1) according to one of Claims 1 to 5, **characterized in that**, in the case of a projection into a plane (SE) which is oriented perpendicularly with respect to the centre longitudinal plane (MLE), the arrangement line (A1, A2) has an angle (α) with respect to the centre longitudinal plane (MLE) in the range from 5° to 50°, preferably from 10° to 45°, very particularly preferably 25° ± 10°.

7. Watercraft (1) according to one of Claims 1 to 6, **characterized in that** the individual flow-influencing element (9.1, 9.2) is arranged, as viewed in the vertical direction of the ship's body (2), so as to extend in accordance with one of the following possibilities:
- as viewed starting from a base (B) on the ship's floor (6), from the said base (B) as far as the theoretical design waterline (DWL);
- as viewed starting from a base (B) on the ship's floor (6), at a predefined spacing from the said base (B) as far as the theoretical design waterline (DWL);
- as viewed starting from a base (B) on the ship's floor (6), from the said base (B) over a part region of from 1/3 to 2/3 of the extent of the ship's body (2) in the vertical direction;
- as viewed starting from a base (B) on the ship's floor (6), at a predefined spacing from the said base (B) over a part region from 1/3 to 2/3 of the extent of the ship's body in the vertical direction.

8. Watercraft (1) according to one of the preceding claims, **characterized in that** the individual flow-influencing element (9.1, 9.2) or the arrangement line is arranged, as viewed from the stern, in a region in relation to a design waterline (DWL) on the outer circumference of the ship's body (2), as viewed starting from the centre longitudinal plane (MLB), of 1% and 30% of the length of the design waterline (DWL).

9. Watercraft (1) according to one of the preceding claims, **characterized in that** the individual flow-influencing element (9.1, 9.2) or the arrangement line of the individual flow-influencing element (9.1, 9.2) is arranged, starting from a theoretical separation line of the flow on the ship's body (2), so as to run at an upstream spacing of approximately 10-30 cm.

10. Watercraft (1) according to one of the preceding claims, **characterized in that** in each case a plurality of individual flow-influencing elements (9.1a, 9.1b, 9.2a, 9.2b) are arranged on both sides of the centre longitudinal plane (MLE) in series along an arrangement line (A1, A2).

11. Watercraft (1) according to one of the preceding claims, **characterized in that** the individual flow-influencing element (9.1, 9.2) has at least one bearing face for bearing flush against the ship's hull (7) and is connected to the latter in a positively locking or integrally joined manner.

12. Watercraft (1) according to one of the preceding claims, **characterized in that** it has at least one drive, preferably two controllable drive units which are arranged on both sides of the centre longitudinal plane.

## Revendications

1. Véhicule marin (1), en particulier remorqueur comportant une coque de bateau (2) dotée d'une enveloppe de bateau (7) formée à partir d'un bordé (5) et d'un fond de bateau (6), la forme de poupe de la coque de bateau étant réalisée sous forme de poupe arrondie ou pointue et un dispositif de stabilisation (8) étant agencé au moins dans la zone de poupe (3) de la coque de bateau (2),
**caractérisé en ce que**
le dispositif de stabilisation (8) comprend, dans la zone de poupe, d'un côté du plan médian longitudinal (MLE) de la coque de bateau (2), un élément influençant l'écoulement (9.1, 9.2) s'appuyant avec affleurement contre l'enveloppe de bateau (7) et s'étendant, considéré à partir d'une base (B) sur le fond de bateau (6), sur au moins une zone partielle de l'enveloppe de bateau (7) dans la direction verticale le long d'une ligne d'agencement théorique (A1, A2), lequel élément est doté d'une surface d'arrivée d'écoulement (10.1, 10.2) réalisée autour de la ligne d'agencement (A1, A2), l'élément individuel influençant l'écoulement (9.1, 9.2) étant réalisé sous forme d'élément profilé plein ou d'élément profilé creux, en particulier sous forme de barres ou d'élément profilé tubulaire, et la surface d'arrivée l'écoulement (A1, A2) de l'élément individuel influençant l'écoulement (9.1, 1.2) étant réalisée de manière à s'étendre de façon incurvée autour de la ligne d'agencement (A1, A2), la courbure pouvant être décrite par un rayon (r) ou plusieurs rayons (r1 à rn).

2. Véhicule marin (1) selon la revendication 1,
**caractérisé en ce que**
des deux côtés du plan médian longitudinal (MLE) de la coque de bateau (2) comprend respectivement au moins un élément influençant l'écoulement (9.1, 9.2) s'appuyant avec affleurement contre l'enveloppe de bateau (7) et s'étendant, considéré à partir d'une base (B) sur le fond de bateau (6), sur au moins une zone partielle de l'enveloppe de bateau (7) dans la direction verticale le long d'une ligne d'agencement théorique (A1, A2), lequel élément est doté d'une surface d'arrivée d'écoulement (10.1, 10.2) réalisée autour de la ligne d'agencement (A1, A2).

3. Véhicule marin (1) selon la revendication 1 ou 2,
**caractérisé en ce que**
la ligne d'agencement (A1, A2) pour l'élément individuel influençant l'écoulement (9.1, 9.2) s'étend dans la direction verticale de l'enveloppe de bateau (7), considérée à partir d'une base (B) sur le fond de bateau (6), avec sa composante directionnelle principale dans la direction verticale.

4. Véhicule marin (1) selon la revendication 1 ou 2,
**caractérisé en ce que**
la distance de la ligne d'agencement (A1, A2) pour l'élément individuel influençant l'écoulement (9.1, 9.2) au plan médian longitudinal (MLE) de la coque de bateau (2) dans la zone d'extrémité tournée vers la base est plus petite que dans la zone d'extrémité opposée à la base (B) considérée dans la direction verticale.

5. Véhicule marin (1) selon l'une des revendications 1 à 4,
**caractérisé en ce que**
la ligne d'agencement (A1, A2) présente, dans une projection dans un plan longitudinal orienté parallèlement au plan médian longitudinal (MLE), un angle (β) par rapport à un plan (SE) orienté perpendiculairement au plan médian longitudinal (MLE) dans la plage de 5° à 50°, de préférence de 10° à 45°, mieux encore de 25° ± 10°.

6. Véhicule marin (1) selon l'une des revendications 1 à 5,
**caractérisé en ce que**
la ligne d'agencement (A1, A2) présente, dans une projection dans un plan (SE) orienté perpendiculairement au plan médian longitudinal (MLE), un angle (α) par rapport au plan médian longitudinal (MLE) dans la plage de 5° à 50°, de préférence de 10° à 45°, mieux encore de 25° ± 10°.

7. Véhicule marin (1) selon l'une des revendications 1 à 6,
**caractérisé en ce que**
l'élément individuel influençant l'écoulement (9.1, 9.2) est, considéré dans la direction verticale de la coque de bateau (2), agencé de manière à s'étendre selon l'une des possibilités suivantes :
- considéré à partir d'une base (B) sur le fond de bateau (6), à partir de celle-ci jusqu'à la ligne de flottaison de construction théorique (KWL) ;
- considéré à partir d'une base (B) sur le fond de bateau (6), à une distance prédéfinie de celle-ci jusqu'à la ligne de flottaison de construction théorique (KWL) ;
- considéré à partir d'une base (B) sur le fond de bateau (6), à partir de celle-ci sur une zone partielle de 1/3 à 2/3 de l'étendue de la coque de bateau (2) dans la direction verticale ;
- considéré à partir d'une base (B) sur le fond de bateau (6), à une distance prédéfinie de celle-ci sur une zone partielle de 1/3 à 2/3 de l'étendue de la coque de bateau dans la direction verticale.

8. Véhicule marin (1) selon l'une des revendications précédentes,
**caractérisé en ce que**
l'élément individuel influençant l'écoulement (9.1, 9.2) ou la ligne d'agencement est agencé(e) dans une zone par rapport à une ligne de flottaison de construction (KWL), considérée à la périphérie extérieure de la coque de bateau (2), à partir du plan médian longitudinal (MLB), de 1% et 30% de la longueur de la ligne de flottaison de construction (KWL) vue à partir de la proue.

9. Véhicule marin (1) selon l'une des revendications précédentes,
**caractérisé en ce que**
l'élément individuel influençant l'écoulement (9.1, 9.2) ou la ligne d'agencement de l'élément individuel influençant l'écoulement (9.1, 9.2) est/sont agencé(s) à partir d'une ligne de décollement théorique de l'écoulement sur la coque de bateau (2) de manière à s'étendre à une distance d'environ 10 à 30 cm située en amont.

10. Véhicule marin (1) selon l'une des revendications précédentes,
**caractérisé en ce que**
respectivement une pluralité d'éléments individuels influençant l'écoulement (9.1a, 9.1b, 9.2a, 9.2b) sont agencés des deux côtés du plan médian longitudinal (MLE) en rangée le long d'une ligne d'agencement (A1, A2).

11. Véhicule marin (1) selon l'une des revendications précédentes,
**caractérisé en ce que**
l'élément individuel influençant l'écoulement (9.1, 9.2) comprend au moins une surface d'appui pour l'appui avec affleurement contre l'enveloppe de bateau (7) et est relié à celle-ci par complémentarité de forme ou par liaison de matière.

12. Véhicule marin (1) selon l'une des revendications précédentes,
**caractérisé en ce que**
celui-ci comprend au moins un entraînement, de préférence deux unités d'entraînement pouvant être commandées et agencées des deux côtés du plan médian longitudinal.
